# EUROPEAN PATENT SPECIFICATION

(11) **EP 3 466 718 B1**
(45) Date of publication and mention of the grant of the patent: **13.05.2020**
(21) Application number: 17802822.1
(22) Date of filing: 24.05.2017
(51) Int. Cl.: B60C 1/00, B60C 11/00, C08K 3/36, C08L 9/06, C08L 15/00

(54) **TIRE FOR TWO-WHEEL VEHICLES**
REIFEN FÜR ZWEIRÄDRIGE FAHRZEUGE
PNEU POUR VÉHICULES À DEUX ROUES

(30) Priority: 26.05.2016 JP 2016104960
(43) Date of publication of application: 10.04.2019
(73) Proprietor: Bridgestone Corporation, Tokyo 104-8340 (JP)
(72) Inventor: MIYAMOTO, Yukari, Tokyo 104-8340 (JP)
(74) Representative: Lang, Johannes
(86) International application number: PCT/JP2017/019303
(87) International publication number: WO 2017/204236

(56) References cited:
- JP-A- 2012 107 129
- JP-A- 2015 137 057
- JP-A- 2016 065 175
- JP-B1- 5 841 225
- US-A1- 2014 371 345

## Description

### TECHNICAL FIELD

The present invention relates to a tire for two-wheel vehicles.

### BACKGROUND ART

The tire for two-wheel vehicles is requested to have a high grip performance, because the inclination of the equatorial plane of the tire with respect to the road surface becomes large when cornering the vehicle. In addition, the grip performance is roughly divided into two, mainly improvement of dry grip performance (steering stability on dry road surface) and wet grip performance (braking performance on wet road surface) are being studied.

In addition, the tire for two-wheel vehicles is required to have high abrasion resistance, because the load loading per unit area is large.

In the motorcycle tires, since the vehicle body of the motorcycle is substantially upright with respect to the road surface during straight travel, the center section of the tire tread section mainly contacts the road surface. On the other hand, since the vehicle body of the motorcycle is inclined with respect to the road surface during turning travel, the shoulder section of the tire tread section mainly contacts the road surface.

Conventionally, as a tire for a motorcycle in which the performance required for such straight travel and the performance requested for turning travel are compatible to some extent, the tire which uses two types of tread rubbers when dividing the tread into three in the tire width direction has been developed.

For example, in order to enhance the high-speed durability of a pneumatic tire for a motorcycle, it is proposed that a pneumatic tire mounted on a motorcycle in which the tangential force coefficient is 1.1 or more, having a pair of bead sections with a bead core embedded therein, a pair of side wall sections extending from the bead sections outwardly in the tire radial direction, and a tread section extending across the side wall sections, wherein, when the tread section is divided into three sections so as to have a center area including the tire equatorial plane and both shoulder areas located across the center area, in at least the center area, tan δ/E' which is the ratio of the loss tangent tan δ to the dynamic modulus E' of elasticity at 60°C is in a range of from 0.025 to0.075 (for example, see PLT 1).

### CITATION LIST

### PATENT LITERATURE

PTL 1: JP-A 2006-273240

Other known tires are described in JP 5841225-B, JP 2012-107129-A and JP 2016-65175.

### SUMMARY OF INVENTION

### TECHNICAL PROBLEM

However, in the tire described in PTL 1, the wet grip performance and the abrasion resistance cannot be achieved at a high level.

It is an object of the present invention to provide a tire that achieves both the wet grip performance and the abrasion resistance in the tread.

### SOLUTION TO PROBLEM

The present inventor has made extensive studies to achieve the above object, and as a result, found that the wet grip performance and the abrasion resistance can be compatible at a high level as a tread of a tire for two-wheel vehicles, by using a divided tread which is divided into a center section and two shoulder sections sandwiching the center section and by using a rubber component containing a styrene-butadiene rubber and a modified conjugated diene polymer and a filler having a high silica ratio in the tread.

Namely, the present invention provides a tire according to claim 1.

The dependent claims relate to preferred embodiments.

### ADVANTAGEOUS EFFECTS OF INVENTION

According to the present invention, there can be provided a tire for two-wheel vehicles that can be compatible the wet grip performance and the abrasion resistance.

### DESCRIPTION OF EMBODIMENTS

A tire for two-wheel vehicles of the present invention contains a pair of bead sections, a pair of side wall sections, and a tread section continuing to both sidewall sections, wherein the tread section is divided into three by the center section including the tire equatorial plane and the pair of shoulder sections including the tread end in the tire width direction. In the tire for two-wheel vehicles of the present invention, both the tread rubber of the center section and the tread rubber of the shoulder sections include a rubber component containing a styrene-butadiene rubber and a modified conjugated diene polymer and silica, and the tread rubber of the center section and the tread rubber of the shoulder sections include 40 to 120 parts by mass of a filler based on 100 parts by mass of the rubber component, wherein an amount of the silica in the filler is 80% by mass or more.

The tire for two-wheel vehicles is not particularly limited, and it may be a front tire or a rear tire, but in the present invention, since it is possible to achieve both high wet grip performance and high abrasion resistance of the tread, the effect of the present invention tends to be particularly exerted when applied to a rear tire.

The tire for two-wheel vehicles is not particularly limited, and it is possible to select appropriately according to the object, and for example, a competition motorcycle, a general public roadway motorcycle, an on-road motorcycle, an off-road motorcycle, and the like can be cited. Among them, as the tire for two-wheel vehicles in which the effect of the present invention is particularly likely to develop, the general public roadway motorcycle and the on-road motorcycle is preferably, and the general public roadway motorcycle is more preferably.

<Structure of tire>

A tire for two-wheel vehicles of the present invention contains a pair of bead sections, a pair of side wall sections, and a tread section continuing to both sidewall sections, wherein the tread section is divided into three by the center section including the tire equatorial plane and the pair of shoulder sections including the tread end in the tire width direction.

Each bead section usually has a bead core, and one or more carcass layers extend in a toroidal shape between a pair of bead cores. The carcass layer is formed by rubber-coating a plurality of carcass cords.

The sidewall sections extend outwardly in the tire radial direction from the bead section on the side face of the tire for a motorcycle to reinforce and protect the side face.

The tread section extends across both sidewall sections.

In the present invention, the tread section uses a divided tread which is divided into a center section and two shoulder sections sandwiching the center section. In the divided tread, the tread section is divided into three by a center section including a tire equatorial plane and a pair of shoulder sections including a tread end. The tire equator is the latitude line of the tire passing through the center in the tire width direction, and the surface in the tire circumferential direction including the tire equator is referred to as the tire equatorial plane.

In the center section, more specifically, the curved length (Lc) in the width direction of the surface of the tread section is preferably 30 to 60% of the maximum length (L_{T}) of the curved length in the width direction of the total surface area of the tread section, and is more preferably 40 to 50%. When the curved length (Lc) in the width direction of the surface of the tread section is 30% or more of the maximum length (L_{T}) of the curved length in the width direction of the entire surface area of the tread section, the abrasion resistance can be ensured, and when he curved length (Lc) in the width direction of the surface of the tread section is 60% or less, the deterioration of the wet grip performance is suppressed. If the curved length (Lc) in the width direction of the surface of the tread section is 40 to 50% of the maximum length (L_{T}) of the curved length in the width direction of the entire surface area of the tread section, it is advantageous in terms of excellent balance of the wet grip performance and abrasion resistance.

The curvilinear length (Ls) in the width direction of the surface of the tread section of the shoulder sections may be different between one shoulder section and the other shoulder section, but usually, the both are preferably the same, it is preferable that the shoulder section (one side) is preferably (100 -L_{C})/2% of L_{T}.

The rubber constituting the tread section is referred to as tread rubber, and the rubber constituting the shoulder sections is referred to as "tread rubber of the shoulder section" or simply "shoulder rubber". In addition, the rubber constituting the center section is referred to as "tread rubber of the center section" or simply "center rubber".

In addition, the rubber composition constituting the tread rubber before vulcanization is referred to as a rubber composition for a tread. Namely, the rubber obtained by vulcanizing the tread rubber composition is a tread rubber.

### <Tread rubber>

In the present invention, both the tread rubber of the center section and the tread rubber of the shoulder sections of the tread rubber comprise a rubber component containing a styrene-butadiene rubber and a modified conjugated diene polymer, and 40 to 120 parts by mass of a filler based on 100 parts by mass of the rubber component. The filler contains at least silica, and an amount of the silica in the filler is 80% by mass or more.

The wet grip performance of the tire can be judged by using tan δ at 0°C of the tread rubber as an index and it is known that when the tan δ at 0°C of the tread rubber is low, the wet grip performance of the tire is deteriorated.

By including a large amount of filler in the tread rubber, the tan δ of the tire can be improved. However, among the fillers, since silica is difficult to be dispersed in rubber, when the concentration of the filler is increased, the silica is localized in the rubber and tends to lower the abrasion resistance.

In the present invention, the tread rubber contains maximum of 120 parts by mass of filler based on 100 parts by mass of the rubber component, and 80% by mass or more of the filler is silica.

However, in the present invention, since the modified conjugated diene polymer is contained in the rubber component, the silica-containing filler is dispersed in the rubber, and it is thought that the localization of silica can be suppressed and the deterioration of the abrasion resistance can be suppressed even though the concentration of the filler is high.

As described above, in a tire for a motorcycle, since the vehicle body of the motorcycle is substantially upright with respect to the road surface during straight travel, the tread rubber of the center section (center rubber) mainly contacts the road surface and has a longer traveling time on the wet road as compared with tread rubber of the shoulder sections (shoulder rubber). Therefore, the center rubber is particularly required to have the wet grip performance as compared with the shoulder rubber. Thereby, the tan δ at 0°C of the center rubber is larger than tan δ at 0°C of the shoulder rubber, namely, 1.0 < [{tan δ at 0°C of the tread rubber at the center section}/{tan δ at 0°C of the tread rubber at the shoulder sections}]. "[{tan δ at 0°C of the tread rubber at the center section}/{tan δ at 0°C of the tread rubber at the shoulder sections}]" may be referred to as "tan δ ratio".

From the viewpoint of the balance between the abrasion resistance of the center rubber and the shoulder rubber, the upper limit of the tan δ ratio is preferably 2.0, more preferably 1.0 <tan δ ratio <1.8, further preferably 1.0 <tan δ ratio < 1.6.

Each component constituting the tread rubber will be described below.

### [Rubber component]

Both the tread rubber of the center section and the tread rubber of the shoulder sections contain a rubber component containing a styrene-butadiene rubber and a modified conjugated diene polymer.

The rubber component may contain rubber other than the styrene-butadiene rubber and the modified conjugated diene polymer, and examples thereof include natural rubber, butadiene rubber, acrylonitrile-butadiene rubber, chloroprene rubber, and mixtures thereof.

In the tread rubber of the center section, the amount of the styrene-butadiene rubber in the rubber component is 50% by mass or more, more preferably 60% by mass or more, further more preferably 70% by mass or more.

In the tread rubber of the shoulder sections, the amount of the styrene-butadiene rubber in the rubber component is 50% by mass or more, more preferably 70% by mass or more, further more preferably 80% by mass or more.

In addition, the amount of the styrene-butadiene rubber contained in the tread rubber of the center section is preferably smaller than the amount of the styrene-butadiene rubber contained in the tread rubber of the shoulder sections.

When the amount of the styrene-butadiene rubber contained in the center rubber is A_{C} and the amount of the styrene-butadiene rubber contained in the shoulder rubber is As, and the relation as (A_{C}/A_{S}) <1.0 is satisfied, it is possible to achieve the wet grip performance and the abrasion resistance at a higher level at the same time.

(A_{c}/Aₛ) preferably exceeds 0.5 from the viewpoint of balance between the wet grip performance and the abrasion resistance of the center section and the shoulder sections. Namely, 0.5< (A_{C}/A_{S}) <1.0 is preferable. 0.5< (A_{C}/A_{S}) <0.9 is more preferable.

The modified conjugated diene polymer is contained both the rubber component of the center rubber and the rubber component of the shoulder rubber.

The rubber component is the rubber component containing mainly the mixture of the styrene-butadiene rubber and the modified conjugated diene polymer. Specifically, in the rubber component, the amount of the mixture of the styrene-butadiene rubber and the modified conjugated diene polymer is preferably 70% by mass or more, more preferably 80% by mass or more, further preferably 90% by mass or more, 100% by mass or more.

In both the center rubber and the shoulder rubber, the amount of the modified conjugated diene polymer in the rubber component is 10% by mass or more. When the amount of the modified conjugated diene polymer in the rubber component is 10% by mass or more, the dispersibility of the filler (particularly silica) in the rubber component is excellent and abrasion resistance can be secured. From the viewpoints of the strength of the center rubber and the shoulder rubber and the wet grip performance, the amount of the modified conjugated diene polymer in the rubber component of each tread rubber is preferably 50% by mass or less.

In the center rubber, the amount of the modified conjugated diene polymer in the rubber component is 10% by mass or more and preferably 50% by mass or less, and more preferably 20% by mass or more and 40%by mass or less. In the shoulder rubber, the amount of the modified conjugated diene polymer in the rubber component is preferably 30%by mass or less, and more preferably 20%by mass or less.

In the tire for motorcycle, since the center rubber as compered of the shoulder rubber is strongly requested the abrasion resistance, the amount of the modified conjugated diene polymer in the center rubber is larger than the amount of the modified conjugated diene polymer in the shoulder rubber.

Molecular composition of the modified conjugated diene polymer will be described in detail below.

### (Modified conjugated diene polymer)

The modified conjugated diene polymer is a conjugated diene polymer having a modified functional group.

First, the conjugated diene polymer will be described.

### [Conjugated diene polymer]

In the present specification, the conjugated diene polymer means a homopolymer of a conjugated diene compound or a copolymer of a conjugated diene compound and a non-conjugated olefin compound. The polymer may be polymerized by anionic polymerization or polymerized by coordination polymerization.

Examples of conjugated diene polymer, which are not particularly limited, may be appropriately selected according to the purpose. Examples of conjugated diene polymer include non-cyclic monomers such as 1,3-butadiene, isoprene, 1,3-pentadiene, 2,3-dimethyl-1,3-butadiene and 1,3-hexadiene, and the like; aromatic vinyl monomers such as styrene, α-methylstyrene, p-methylstyrene, vinyltoluene and vinyl naphthalene, and the like. These may be used singly or in combinations of two or more.

Examples of non-conjugated olefin compound, which are not particularly limited, may be appropriately selected according to the purpose. Examples of non-conjugated olefin compound include ethylene, propylene, 1-butene, 1-pentene, 1-hexene, 1-heptene, 1-octene and the like. These may be used singly or in combinations of two or more.

Among the modified conjugated diene polymer, the modified polybutadiene is preferably from the viewpoints of the abrasion resistance.

### [Modifying functional group]

A modifying functional group, which are not particularly limited, may be appropriately selected according to the purpose. The modified functional group of the modified conjugated diene polymer preferably contains at least one atom selected from the group consisting of a nitrogen atom, a silica atom, an oxygen atom, and a tin atom. These may be used singly or in combinations of two or more.

Examples thereof include modifying functional groups containing a nitrogen atom, modifying functional groups containing a silicon atom, modifying functional groups containing an oxygen atom, and modifying functional groups containing a tin atom. One alone or two or more of these may be used here either singly or as combined.

Of these, modifying functional groups containing a nitrogen atom, modifying functional group containing a silicon atom, and modifying functional group containing an oxygen atom are preferable in that it can provide favorable abrasion resistance, high reinforcing property and high elasticity because the interaction between the conjugated diene polymer and the filler such as silica, carbon black and the like is strengthened.

A method for introducing a modifying functional group is not specifically defined and may be appropriately selected depending on the purpose. Examples thereof include a method including use of a functional group-containing polymerization initiator, a method including copolymerizing a functional group-containing monomer with another compound, and a method including allowing a modifying agent to react on polymer terminals of the modified conjugated diene polymer. One alone or two or more of these methods may be carried out here either singly or as combined.

### - Modifying functional group containing a nitrogen atom -

The modifying functional group containing a nitrogen atom is not specifically defined and may be appropriately selected depending on the purpose. Examples thereof include substituted amino groups represented by the following general formula (I) and cyclic amino groups represented by the following general formula (II): 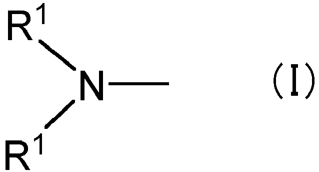 wherein R¹ is an alkyl group, a cycloalkyl group, or an aralkyl group having from 1 to 12 carbon atoms. Here, the alkyl group is preferably a methyl group, an ethyl group, a butyl group, an octyl group, or an isobutyl group, the cycloalkyl group is preferably a cyclohexyl group, and the aralkyl group is preferably a 3-phenyl-1-propyl group. Each R¹ may be the same or different. 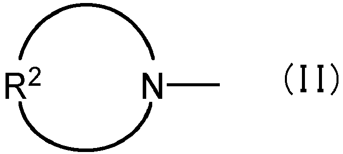 wherein the R² group is an alkylene group, a substituted alkylene group, an oxy-alkylene group, or a N-alkylamino-alkylene group having from 3 to 16 methylene groups. Here, the substituted alkylene group includes monosubstituted to octasubstituted alkylene groups, and examples of substituents include a linear or branched chain alkyl group, a cycloalkyl group, a bicycloalkyl group, an aryl group, or an aralkyl group having from 1 to 12 carbon atoms. Here, the alkylene group is preferably a trimethylene group, a tetramethylene group, a hexamethylene group, and a dodecamethylene group, the substituted alkylene group is preferably a hexadecamethylene group, the oxyalkylene group is preferably an oxydiethylene group, and the N-alkylamino-alkylene group is preferably a N-alkylazadiethylene group.

Examples of the cyclic amino group represented by the general formula (II) are not specifically defined and may be appropriately selected depending on the purpose. Examples thereof include 2-(2-ethylhexyl)pyrrolidine, 3-(2-propyl)pyrrolidine, 3,5-bis(2-ethylhexyl)piperidine, 4-phenylpiperidine, 7-decyl-1-azacyclotridecane, 3,3-dimethyl-1-azacyclotetradecane, 4-dodecyl-1-azacyclooctane, 4-(2-phenylbutyl)-1-azacyclooctane, 3-ethyl-5-cyclohexyl-1-azacycloheptane, 4-hexyl-1-azacycloheptane, 9-isoamyl-1-azacycloheptadecane, 2-methyl-1-azacycloheptadec-9-en, 3-isobutyl-1-azacyclododecane, 2-methyl-7-t-butyl-1-azacyclododecane, 5-nonyl-1-azacyclododecane, 8-(4'-methylphenyl)-5-pentyl-3-azabicyclo[5.4.0]undecane, 1-butyl-6-azabicyclo[3.2.1]octane, 8-ethyl-3-azabicyclo[3.2.1]octane, 1-propyl-3-azabicyclo[3.2.2]nonane, 3-(t-butyl)-7-azabicyclo[4.3.0]nonane, 1,5,5-trimethyl-3-azabicyclo[4.4.0]decane or the like. One alone or two or more of these may be used here either singly or as combined.

### - Modifying functional group containing a silicon atom -

The modifying functional group containing a silicon atom is not specifically defined and may be appropriately selected depending on the purpose. Examples thereof include modifying functional groups having a silicon-carbon bond that are formed by using a coupling agent represented by the following general formula (III) .

Such modifying functional groups are preferred in that allowing the modified conjugated diene polymer to chemically bond with silicon via a silicon-carbon bond can increase the affinity between the rubber composition and the filler to thereby allow the rubber composition to provide favorable abrasion resistance and high reinforcing property.

Silicon generally has low ability of reinforcing the rubber composition and the like due to its low affinity for the polymer when merely mixed into a rubber composition. However, when the modified conjugated diene polymer is allowed to chemically bond with silicon via a silicon-carbon bond, the affinity between the rubber composition and the filler can be enhanced to thereby further provide favorable abrasion resistance and high reinforcing property.

(R³)ₐZ(R⁴)_{b} (III)

wherein Z is silicon, R³s are each independently selected from the group consisting of an alkyl group having from 1 to 20 carbon atoms, a cycloalkyl group having from 3 to 20 carbon atoms, an aryl group having from 6 to 20 carbon atoms, and an aralkyl group having from 7 to 20 carbon atoms, R⁴s are each independently chlorine or bromine, a is from 0 to 3, b is from 1 to 4, and a + b = 4. Here, the alkyl group is preferably a methyl group, an ethyl group, a n-butyl group, a n-octyl group, and a 2-ethylhexyl, the cycloalkyl group is preferably a cyclohexyl group, the aryl group is preferably a phenyl group, and the aralkyl group is preferably a neophyl group. Each R³ may be the same or different. Each R⁴ may be the same or different.

Examples of a coupling agent containing silicon are not specifically defined and may be appropriately selected depending on the purpose. Examples thereof include hydrocarbyloxysilane compounds, SiCl₄ (silicon tetrachloride), (R³)SiCl₃, (R³)₂SiCl₂, and (R³)₃SiCl.

Of these, hydrocarbyloxysilane compounds are preferred from the viewpoint of having a high affinity for silica.

### (Hydrocarbyloxysilane Compound)

Hydrocarbyloxysilane compounds are not specifically defined and may be appropriately selected depending on the purpose. Examples thereof include hydrocarbyloxysilane compounds represented by the following general formula (IV): 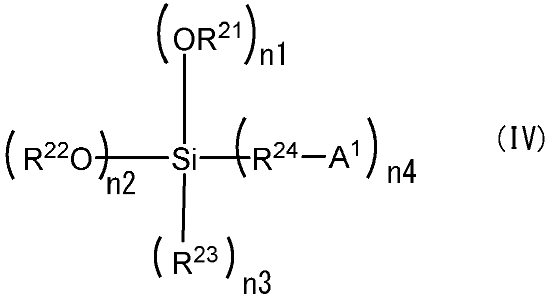 wherein n1 + n2 + n3 + n4 = 4, provided that n2 is an integer from 1 to 4 and n1, n3, and n4 each are an integer of from 0 to 3, and A¹ represents at least one functional group selected from a saturated cyclic tertiary amine compound residue, an unsaturated cyclic tertiary amine compound residue, a ketimine residue, a nitrile group, a (thio)isocyanate group (representing an isocyanate group or a thioisocyanate group: the same shall apply hereinafter), a (thio)epoxy group, a trihydrocarbyl isocyanurate group, a dihydrocarbyl carbonate group, a nitrile group, a pyridine group, a (thio)ketone group, a (thio)aldehyde group, an amide group, a (thio)carboxylate group, a (thio)carboxylate metal salt group, a carboxylic acid anhydride residue, a carboxylic acid halide residue, and a hydrolysable group-having, primary or secondary amino group or mercapto group. When n4 is 2 or more, then A¹s may be the same or different, A¹ may bond to Si to be a divalent group that forms a cyclic structure. R²¹ represents a monovalent aliphatic or alicyclic hydrocarbon group, having from 1 to 20 carbon atoms, or a monovalent aromatic hydrocarbon group having from 6 to 18 carbon atoms. When n1 is 2 or more, then R²¹_{S} may be the same or different. R²³ represents a monovalent aliphatic or alicyclic hydrocarbon group, having from 1 to 20 carbon atoms, a monovalent aromatic hydrocarbon group having from 6 to 18 carbon atoms, or a halogen atom (fluorine, chlorine, bromine, iodine). When n3 is 2 or more, then R²³s may be the same or different. R²² represents a monovalent aliphatic or alicyclic hydrocarbon group, having from 1 to 20 carbon atoms or a monovalent aromatic hydrocarbon group having from 6 to 18 carbon atoms, optionally having a nitrogen atom and/or a silicon atom. When n2 is 2 or more, then R²²s may be the same or different, or may bond to each other to form a ring. R²⁴ represents a divalent aliphatic or alicyclic hydrocarbon group, having from 1 to 20 carbon atoms, or a divalent aromatic hydrocarbon group having from 6 to 18 carbon atoms. When n4 is 2 or more, then R²⁴s may be the same or different. The hydrolysable group in the hydrolysable group-having, primary or secondary amino group or the hydrolysable group-having mercapto group is preferably a trimethylsilyl group or a tert-butyldimethylsilyl group, more preferably a trimethylsilyl group. In the present specification, "monovalent aliphatic or alicyclic hydrocarbon group, having from 1 to 20 carbon atoms" means "monovalent aliphatic hydrocarbon group having from 1 to 20 carbon atoms, or monovalent alicyclic hydrocarbon group having from 3 to 20 carbon atoms". The same shall apply to the divalent hydrocarbon group.

More preferably, the hydrocarbyloxysilane compound represented by the general formula (IV) is a hydrocarbyloxysilane compound represented by the following general formula (V):

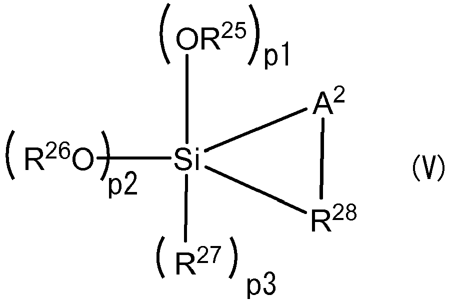

In the formula, p1 + p2 + p3 = 2 (wherein p2 is an integer of from 1 to 2, and p1 and p3 each are an integer of from 0 to 1); A² represents NRa (where Ra represents a monovalent hydrocarbon group, a hydrolysable group or a nitrogen-containing organic group; and the hydrolysable group is preferably a trimethylsilyl group or a tert-butyldimethylsilyl group, more preferably a trimethylsilyl group), or a sulfur; R²⁵ represents a monovalent aliphatic or alicyclic hydrocarbon group, having from 1 to 20 carbon atoms, or a monovalent aromatic hydrocarbon group having from 6 to 18 carbon atoms; R²⁷ represents a monovalent aliphatic or alicyclic hydrocarbon group, having from 1 to 20 carbon atoms, a monovalent aromatic hydrocarbon group having from 6 to 18 carbon atoms, or a halogen atom (fluorine, chlorine, bromine, iodine); R²⁶ represents a monovalent aliphatic or alicyclic hydrocarbon group, having from 1 to 20 carbon atoms, a monovalent aromatic hydrocarbon group having from 6 to 18 carbon atoms or a nitrogen-containing organic group, optionally having a nitrogen atom and/or a silicon atom. When p2 is 2, then R²⁶s may be the same or different, or may bond to each other to form a ring. R²⁸ represents a divalent aliphatic or alicyclic hydrocarbon group, having from 1 to 20 carbon atoms, or a divalent aromatic hydrocarbon group having from 6 to 18 carbon atoms.

Further, the hydrocarbyloxysilane compound represented by the general formula (IV) is more preferably a hydrocarbyloxysilane compound represented by the following general formula (VI) or (VII):

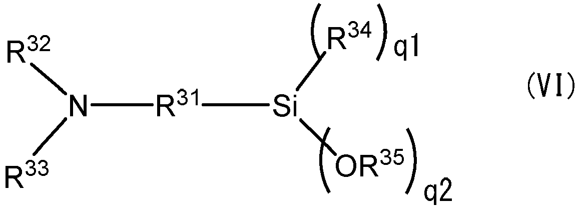

In the formula, q1 + q2 = 3 (where q1 is an integer of from 0 to 2, and q2 is an integer of from 1 to 3); R³¹ represents a divalent aliphatic or alicyclic hydrocarbon group, having from 1 to 20 carbon atoms, or a divalent aromatic hydrocarbon group having from 6 to 18 carbon atoms; R³² and R³³ each independently represent a hydrolysable group, a monovalent aliphatic or alicyclic hydrocarbon group, having from 1 to 20 carbon atoms, or a monovalent aromatic hydrocarbon group having from 6 to 18 carbon atoms; R³⁴ represents a monovalent aliphatic or alicyclic hydrocarbon group, having from 1 to 20 carbon atoms, or a monovalent aromatic hydrocarbon group having from 6 to 18 carbon atoms. When q1 is 2, then R³⁴s may be the same or different. R³⁵ represents a monovalent aliphatic or alicyclic hydrocarbon group, having from 1 to 20 carbon atoms, or a monovalent aromatic hydrocarbon group having from 6 to 18 carbon atoms. When q2 is 2 or more, then R³⁵s may be the same or different.

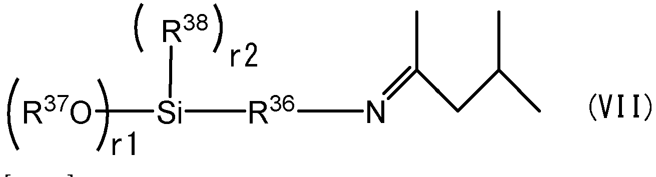

In the formula, r1 + r2 = 3 (where r1 is an integer of from 1 to 3, r2 is an integer of from 0 to 2); R³⁶ represents a divalent aliphatic or alicyclic hydrocarbon group, having from 1 to 20 carbon atoms, or a divalent aromatic hydrocarbon group having from 6 to 18 carbon atoms; R³⁷ represents a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a monovalent aliphatic or alicyclic hydrocarbon group, having from 1 to 20 carbon atoms, or a monovalent aromatic hydrocarbon group having from 6 to 18 carbon atoms. When r1 is 2 or more, then R³⁷s may be the same or different. R³⁸ represents a hydrocarbyloxy group having from 1 to 20 carbon atoms, a monovalent aliphatic or alicyclic hydrocarbon group, having from 1 to 20 carbon atoms, or a monovalent aromatic hydrocarbon group having from 6 to 18 carbon atoms. When r2 is 2, then R³⁸s may be the same or different.

It is preferable that the hydrocarbyloxysilane compound represented by the general formula (IV) has two or more nitrogen atoms represented by the following general formula (VIII) or (IX).

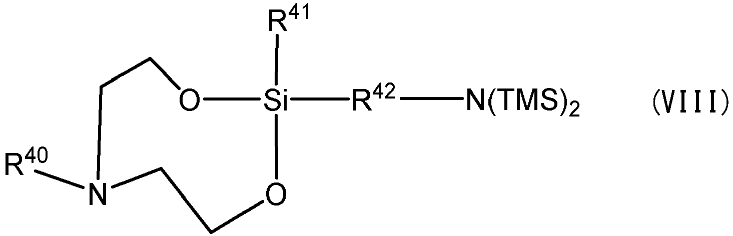

In the formula, TMS represents a trimethylsilyl group; R⁴⁰ represents a trimethylsilyl group, a monovalent aliphatic or alicyclic hydrocarbon group, having from 1 to 20 carbon atoms, or a monovalent aromatic hydrocarbon group having from 6 to 18 carbon atoms; R⁴¹ represents a hydrocarbyloxy group having from 1 to 20 carbon atoms, a monovalent aliphatic or alicyclic hydrocarbon group, having from 1 to 20 carbon atoms, or a monovalent aromatic hydrocarbon group having from 6 to 18 carbon atoms; R⁴² represents a divalent aliphatic or alicyclic hydrocarbon group, having from 1 to 20 carbon atoms, or a divalent aromatic hydrocarbon group having from 6 to 18 carbon atoms.

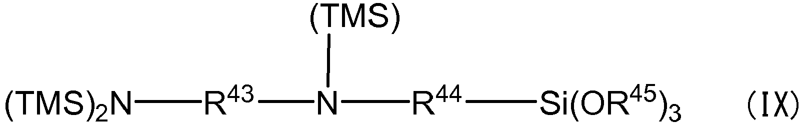

In the formula, TMS represents a trimethylsilyl group; R⁴³ and R⁴⁴ each independently represent a divalent aliphatic or alicyclic hydrocarbon group, having from 1 to 20 carbon atoms, or a divalent aromatic hydrocarbon group having from 6 to 18 carbon atoms; R⁴⁵ represents a monovalent aliphatic or alicyclic hydrocarbon group, having from 1 to 20 carbon atoms, or a monovalent aromatic hydrocarbon group having from 6 to 18 carbon atoms, and plural R⁴⁵s may be the same or different.

Also preferably, the hydrocarbyloxysilane compound represented by the general formula (IV) is a hydrocarbyloxysilane compound represented by the following general formula (X):

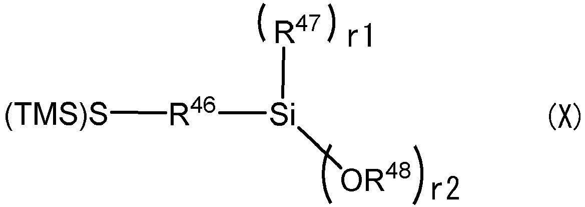

In the formula, r1 + r2 = 3 (wherein r1 is an integer of from 0 to 2, and r2 is an integer of from 1 to 3); TMS represents a trimethylsilyl group; R⁴⁶ represents a divalent aliphatic or alicyclic hydrocarbon group, having from 1 to 20 carbon atoms, or a divalent aromatic hydrocarbon group having from 6 to 18 carbon atoms; R⁴⁷ and R⁴⁸ each independently represent a monovalent aliphatic or alicyclic hydrocarbon group, having from 1 to 20 carbon atoms, or a monovalent aromatic hydrocarbon group having from 6 to 18 carbon atoms, and plural R⁴⁷s and R⁴⁸s may be the same or different.

Further, the hydrocarbyloxysilane compound represented by the general formula (IV) is preferably a compound represented by the following general formula (XI):

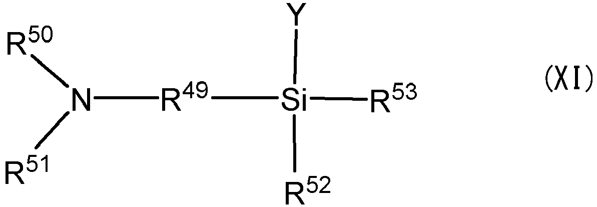

In the formula, Y represents a halogen atom; R⁴⁹ represents a divalent aliphatic or alicyclic hydrocarbon group, having from 1 to 20 carbon atoms, or a divalent aromatic hydrocarbon group having from 6 to 18 carbon atoms; R⁵⁰ and R⁵¹ each independently represent a hydrolysable group, or a monovalent aliphatic or alicyclic hydrocarbon group, having from 1 to 20 carbon atoms, or a monovalent aromatic hydrocarbon group having from 6 to 18 carbon atoms, or R⁵⁰ and R⁵¹ bond to each other to form a divalent organic group; R⁵² and R⁵³ each independently represent a halogen atom, a hydrocarbyloxy group, or a monovalent aliphatic or alicyclic hydrocarbon group, having from 1 to 20 carbon atoms, or a monovalent aromatic hydrocarbon group having from 6 to 18 carbon atoms. Preferably, R⁵⁰ and R⁵¹ each are a hydrolysable group; and as the hydrolysable group, more preferred is a trimethylsilyl group or a tert-butyldimethylsilyl group, and even more preferred is a trimethylsilyl group.

The hydrocarbyloxysilane compound represented by the above-mentioned general formulae (IV) to (XI) is preferably used in producing the modified conjugated diene polymer through anionic polymerization.

Also preferably, the hydrocarbyloxysilane compound represented by the above-mentioned general formulae (IV) to (XI) is an alkoxysilane compound.

A modifying agent preferred when a diene-based polymer is modified by anionic polymerization is not specifically defined and may be appropriately selected depending on the purpose. Examples thereof include 3,4-bis(trimethylsilyloxy)-1-vinylbenzene, 3,4-bis(trimethylsilyloxy)benzaldehyde, 3,4-bis(tert-butyldimethylsilyloxy)benzaldehyde, 2-cyanopyridine, 1,3-dimethyl-2-imidazolidinone, and 1-methyl-2-pyrrolidone. One alone or two or more of these may be used here either singly or as combined.

The hydrocarbyloxysilane compound is preferably the amide moiety of a lithium amide compound to be used as a polymerization initiator in anionic polymerization.

The lithium amide compound is not specifically defined and may be appropriately selected depending on the purpose. Examples thereof include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperadide, lithium ethylpropylamide, lithium ethylbutylamide, lithium ethylbenzylamide, and lithium methylphenethylamide. For example, the modifier constituting the amide moiety of lithium hexamethyleneimide is hexamethyleneimine, the modifier constituting the amide moiety of lithium pyrrolizide is pyrrolidine, and the modifier constituting the amide moiety of lithium piperidide is piperidine. One alone or two or more of these may be used here either singly or as combined.

### - Modifying functional group containing an oxygen atom -

The modifying functional group containing an oxygen atom is not specifically defined and may be appropriately selected depending on the purpose. Examples thereof include alkoxy groups such as a methoxy group, an ethoxy group, a n-propoxy group, an isopropoxy group, a n-butoxy group, a sec-butoxy group, and a t-butoxy group; alkoxyalkyl groups such as a methoxymethyl group, a methoxyethyl group, an ethoxymethyl group, and an ethoxyethyl group; alkoxyaryl groups such as a methoxyphenyl group and an ethoxyphenyl group; alkylene oxide groups such as an epoxy group and a tetrahydrofuranyl group; trialkylsilyloxy groups such as a trimethylsilyloxy group, a triethylsilyloxy group, and a t-butyldimethylsilyloxy group. One alone or two or more of these may be used here either singly or as combined.

### [Filler]

The tread rubber contains 40 to 120 parts by mass of the filler per 100 parts by mass of the rubber component.

When the content of the filler based on 100 parts by mass of the rubber component is 40 parts by mass or more, it is excellent in the wet grip performance, and when it is 120 parts by mass or less, both abrasion resistance and wet grip performance can be compatible at a high level. When the content of the filler relative to the rubber component is within a preferable range or more preferable range, it is advantageous in that it is possible to obtain a grip performance in which the biting property of the rubber against the road surface is balanced with the loss.

The content of the filler based on 100 parts by mass of the rubber component of the filler is preferably from 60 to 120 parts by mass, more preferably from 80 to 100 parts by mass.

The filler contains at least silica and may further contain carbon black or other filler.

### (Silica)

The amount of silica in the filler is 80% by mass or more.

Hereinafter, the amount of silica in the filler may be referred to as "silica ratio".

When the silica ratio is 80% by mass or more, the abrasion resistance can be improved. The silica ratio is more preferably 84% by mass or more, and further preferably 87% by mass or more. In addition, from the viewpoint of balance between the wet grip performance and the abrasion resistance, the ratio is preferably less than 100% by mass, more preferably 97%by mass or less.

Examples of silica, which are not particularly limited, may be appropriately selected according to the purpose. Examples of silica include wet silica (hydrous silicic acid), dry silica (anhydrous silicic acid), calcium silicate and aluminum silicate and the like. These may be used singly or in combinations of two or more.

Among these, the wet silica or dry silica in the form of fine powder is preferable, and wet silica is particularly advantageous in that it has a remarkable effect with respect to improvement of abrasion resistance and improvement of wet grip performance.

The nitrogen adsorption specific surface area of the silica is not particularly limited and may be appropriately selected according to the purpose, but is preferably 80 to 300 m²/g.

When the nitrogen adsorption specific surface area of the silica is 80 m²/g or more, sufficient reinforcing property can be obtained, and if it is 300 m²/g or less, it is preferable in terms of being able to suppress the deterioration in workability. Furthermore, the nitrogen adsorption specific surface area (N₂SA) refers to the specific surface area by the nitrogen adsorption method described in JIS K 6430: 2008.

### (Carbon black)

Examples of carbon black, which are not particularly limited, may be appropriately selected according to the purpose. Examples of carbon black include HAF, ISAF, SAF, and the like based on Classification by ASTM (American Society for Testing and Materials). These may be used singly or in combinations of two or more.

Among these, ISAF and SAF are preferable in that they can improve reinforcing properties.

The nitrogen adsorption specific surface area (N₂SA) of carbon black is not particularly limited and may be appropriately selected according to the purpose, but is preferably 70 m²/g or more.

When the nitrogen adsorption specific surface area (N₂SA) of carbon black is 70 m²/g or more, it is preferable in terms of being able to improve the abrasion resistance favorably. Furthermore, the nitrogen adsorption specific surface area (N₂SA) means the nitrogen adsorption specific surface area described in JIS K 6217-2: 2001.

The amount of carbon black in the filler (hereinafter, the amount of carbon black in the filler may be referred to as "carbon black ratio") is preferably more than 0% by mass and 20% by mass or less.

When the filler contains carbon black, the strength of the tread rubber is enhanced. When the carbon black ratio is 20% by mass or less, it is preferable in terms of being able to suppress the deterioration in wet grip performance. The carbon black ratio is preferably 3 to 15% by mass.

### [Rubber composition for tread]

The tread rubber of the present invention is obtained by vulcanizing a rubber composition (rubber composition for a tread) containing the above rubber component, filler, vulcanizing agent and other additive components.

The components that can be contained in the tread rubber composition are described below.

### [Vulcanizing agent]

The vulcanizing agent is not particularly limited, and sulfur is usually used. Examples thereof include powdered sulfur, precipitated sulfur, colloidal sulfur, surface treated sulfur, and insoluble sulfur.

The content of the vulcanizing agent in the rubber composition for tread of the present invention is preferably from 0.1 to 10 parts by mass relative to 100 parts by mass of the rubber component. A content of vulcanizing agent of 0.1 part by mass or more allows vulcanization to proceed thoroughly, and a content of 10 parts by mass or less suppresses aging of vulcanized rubber.

The content of the vulcanizing agent in the rubber composition is more preferably 0.5 to 7.0 parts by mass, and further preferably 1.0 to 5.0 parts by mass relative to 100 parts by mass of the rubber component.

### [Other additives]

The rubber composition for a tread may further contain a compounding agent commonly used in the rubber industry, for example, a vulcanization accelerator such as a zinc compound typified by zinc oxide or the like; a vulcanization retarder; a process oil such as an aromatic oil or the like; a plasticizer such as a wax or the like; synthetic resins such as petroleum resins, phenol resins, coal resins and xylene resins or the like; natural resins such as rosin resins and terpene resins or the like; fatty acids such as stearic acid or the like; antioxidant, to the extent that the effect of the composition is not impaired.

Examples of the antioxidant include 3C (N-isopropyl-N'-phenyl-p-phenylenediamine), 6C [N-(1,3-dimethylbutyl)-N'-phenyl-p-phenylenediamine], AW (6-ethoxy-2,2,4-trimethyl-1,2-dihydroquinoline), and a high-temperature condensation product of diphenylamine and acetone.

The rubber composition for tread may be obtained by kneading the rubber component, the filler, the vulcanizing agent and the other additives as needed using a kneading machine such as a Banbury mixer, a roll or an internal mixer.

The respective components may be kneaded in a step, or two or more divided steps. When kneading in two stages, the maximum temperature of the first step of kneading is preferably from 140 to 160°C and the maximum temperature of the second step is preferably from 90 to 120°C.

### Examples

Hereinafter the present invention will be described in more detail with reference to Examples, but the present invention is not limited to the following examples.

### <Examples 1 to 15, and Comparative Examples 1 to 8>

### [Synthesis of modified polybutadiene rubber BR1]

### (1) Preparation of catalyst

7.11 g of a cyclohexane solution of butadiene (15.2% by mass), 0.59 mL of a cyclohexane solution of neodymium neodecanoate (0.56 M), 10.32 mL of a toluene solution of methylaluminoxane MAO (Tosoh Akzo's trade name "PMAO") (3.23 M as aluminium concentration), and 7.77 mL of a hexane solution of diisobutylaluminium hydride (by Kanto Chemical) (0.90 M) were, in that order, put into a dried, nitrogen-purged, 100-mL glass bottle with a rubber stopper, and ripened at room temperature for 2 minutes, and then 1.45 mL of a hexane solution of diethylaluminium chloride (by Kanto Chemical) (0.95 M) was added thereto and ripened for 15 minutes at room temperature with intermittently stirring. The neodymium concentration in the thus-obtained catalyst solution was 0.011 M. Furthermore, "M" is "mol/L", the same hereinafter.

### (2) Preparation of intermediate polymer

A glass bottle with a rubber stopper, having a volume of about 900 mL, was dried and purged with nitrogen, and a cyclohexane solution of dried and purified 1,3-butadiene and dry cyclohexane were put thereinto to provide a condition where 400 g of a cyclohexane solution with 12.5% by mass of 1,3-butadiene was kept in the bottle. Next, 2.28 ml (0.025 mmol as neodymium) of the solution of catalyst prepared in (1) above was put into the bottle, and polymerization was carried out in a warm water bath at 50°C for 1.0 hour to give an intermediate polymer.

### (3) Primary Modification

A hexane solution of 3-glycidoxypropyltrimethoxysilane (1 M) as a primary modifier was added so that the amount of 3-glycidoxypropyltrimethoxysilane was 23.5 molar equivalents relative to neodymium to perform modification at 50°C for 60 minutes.

### (4) Processing after second Modification

Subsequently, 1.76 mL (corresponding to 70.5 eq/Nd) of a cyclohexane solution (1.01 M) of bis(2-ethylhexanoate)tin (BEHAS) as a condensation accelerator and 32 µL (corresponding to 70.5 eq/Nd) was added thereto to perform the reaction of modification for another 1 hour at 60°C. Then, 2 mL of an isopropanol 5% by mass solution of an antioxidant 2,2'-methylene-bis(4-ethyl-6-t-butyl phenol) (NS-5) was added to the polymerization system to stop the reaction, and the reaction mixture was reprecipitated in isopropanol containing a small amount of NS-5, and then dried in a drum drier to give the modified polybutadiene BR1. The modified polybutadiene rubber BR1 had a Mooney viscosity ML₁₊₄ (at 100°C) of 93 by measuring at 100°C using an "RLM-01 type tester" manufactured by Toyo Seiki Seisaku-Sho, Ltd.,.

### [Synthesis of modified polybutadiene rubber BR2]

### (Preparation of Polymer A)

1.4 kg of cyclohexane, 250 g of 1,3-butadiene, and a solution of 2,2-ditetrahydrofurylpropane (0.0285 mmol) in cyclohexane was put into a 5 L, nitrogen-purged autoclave in a nitrogen atmosphere. 2.85 mmol of n-butyl lithium (BuLi) was added thereto, and then polymerization was performed in a hot water bath at 50°C equipped with a stirrer for 4.5 hours. The reaction conversion ratio of 1,3-butadiene was almost 100%. This polymer solution was drawn into a methanol solution containing 1.3 g of 2,6-di-tert-butyl-p-cresol to stop the polymerization, and then the solvent was removed by steam stripping, and the resultant was dried using a roll at 110°C to obtain polymer A (modified conjugated diene polymer).

### (Preparation of modified polybutadiene rubber BR2)

Subsequently, the polymer solution was kept at a temperature of 50°C without deactivation of the polymerization catalyst, and 1,129 mg of N,N-bis(trimethylsilyl) aminopropylmethyldiethoxysilane having a precursor capable of generating a primary amino group by hydrolysis was added thereto to perform the reaction of modification for 15 minutes. No condensation accelerator was added. Finally, 2,6-di-tert-butyl-p-cresol was added the polymer solution after the reaction. The mixture was then subjected to steam stripping to remove the solvent and hydrolyze a precursor capable of generating a primary amino group. The rubber was dried with a hot roll adjusted at 110°C to obtain modified polybutadiene rubber BR2 (modified conjugated diene polymer).

### [Preparation of unmodified butadiene rubber BR3]

As unmodified butadiene rubber BR3, trade name "UBEPOL BR 150 L" (manufactured by Ube Industries, Ltd.) was used.

### [Preparation of styrene butadiene rubber (SBR1)]

As styrene butadiene rubber, product name: "TUFDENE 3835" (containing 37.5 parts by mass of oil based on 100 parts by mass of styrene butadiene rubber) manufactured by Asahi Kasei Chemicals Corporation was used.

The amount of SBR1 in Tables 2 to 4 is the amount of SBR1 itself except for oil.

### <Preparation of tire>

Rubber compositions for tread to be used center section and shoulder sections were prepared at the mixing ratios (parts by mass) shown in Table 1 and Tables 2 to 4.

Using the prepared rubber composition for a tread, the rubber composition for a tread has a pair of bead portions and a pair of sidewall portions and a tread portion continuous with both sidewall portions by a conventional method, and the tread section includes a tire for two-wheel vehicles (size: 180/55 ZR 17) was trial produced by dividing it into three by a center section including an equatorial plane and a pair of shoulder sections including a tread end. Herein, when producing the above tire for two-wheel vehicles, a tread section is produced by the prepared rubber composition for a tread described in the above. However, in Comparative Example 1, an undivided tread in which the center section and the shoulder sections were not divided was formed.

The wet grip performance and the abrasion resistance of each rubber composition for a tread used for a tread of a tire for two-wheel vehicles were evaluated in the following manner.

### <Performance evaluation>

### 1. Wet grip test (grip on wet road surface)

On the course of the wet road, the test rider carried out various running and evaluated the feeling about the grip performance of the tire during travel. Evaluation results are shown in Tables 2 to 4.

The evaluation result of Comparative Example 3 was calculated to be 6.5 with a maximum of 10 points, and the index as a relative evaluation was calculated. It is shown that the greater the index is, the greater the wet grip performance of the tire is.

### 2. Abrasion resistance test

On the test course on the paved road, the test rider made the vehicle run 3500 km at 80 km/h. Then, the amount of the remaining groove after running was measured, and the abrasion resistance of the tire was evaluated from the amount of the remaining groove. Evaluation results are shown in Tables 2 to 4.

### 3. The loss tangent (tan δ) and tan δ ratio in each tread rubber

A viscoelasticity measuring equipment (manufactured by Rheometric Corporation) was used to measure a loss tangent (tan δ) at a temperature of 0°C, a distortion of 0.1% and a frequency of 15 Hz. In addition, in the tread rubbers of Examples 1 to 12 and Comparative Examples 2 to 8, the tan δ ratio was calculated from the tan δ of the tread rubber at the center section and the tan δ of the tread rubber at the shoulder sections, and shown in Tables 2 to 4.

**Table 1**

| Composition of Rubber composition for tread | | |
|---|---|---|
| Rubber component | Rubber components shown in Tables 2 to 4 | Amount shown in Tables 2 to 4 (total 100 part by mass) |
| Filler | Silica (*1) | Amount shown in Tables 2 to 4 |
| | Carbon Black (*2) | Amount shown in Tables 2 to 4 |
| Vulcanizing agent | Sulfur | 1.8 |
| Other additives | Silane coupling agent (*3) | Amount to be 10% based on the blended amount of silica |
| | Zinc oxide (*4) | 2.0 |
| | Oil (*5) | 10 |
| | Stearic acid | 1.5 |
| | Antioxidant 6C (*6) | 2.0 |
| | Vulcanization accelerator DPG (*7) | 3.0 |
| | Vulcanization accelerator CZ (*8) | 2.0 |
| (parts by mass) | | |

| | | |
|---|---|---|
| [Note] Notes in Tables 1-4 are as follows. *1: Silica: "NIPSIL AQ" (manufacture by Tosoh Silica Corporation) *2: Carbon black: "VULCAN 10H" (manufacture by CABOT Corporation, N₂SA: 142 m²/g, CTAB: 135 m²/g, DBP: 127 mL/100g) *3: Silane coupling agent: "ABC-856" (manufacture by Shin-Etsu Chemical Co., Ltd.) *4: Zinc oxide: "No. 2 zinc oxide" (manufacture by HAKUSUI TECK Co., Ltd.) *5: Oil: A/O MIX (manufacture by JX Nippon Oil & Energy Corporation), an oil amount shown in the "Oil (* 5)" column in Table 1 is the sum of the oil amount of "A/O MIX" and the oil amount in SBR1. *6: Antioxidant 6C: "ANTGEN 6C" (manufacture by Sumitomo Chemical Co., Ltd.) *7: Vulcanization accelerator DPG: "SOXINOL D" (manufacture by Sumitomo Chemical Co., Ltd.) *8: Vulcanization accelerator CZ: "NOCCELER CZ-G" (manufacture by Ouchi Shinko Industrial Co., Ltd.) | | |

### [Table 2]

**Table 2 (examples 2 and 3 are not according to the present invention)**

| | | | Comparative Example 1 | | Comparative Example 2 | | Comparative Example 3 | |
|---|---|---|---|---|---|---|---|---|
| | | | Undivided | | Center | Shoulder | Center | Shoulder |
| Rubber component | Modified conjugated diene polymer | BR1 | 30 | | | 15 | | 15 |
| | Unmodified conjugated diene polymer | BR3 | | | 10 | | 30 | |
| | Styrene-butadiene copolymer rubber | SBR1 | 70 | | 90 | 85 | 70 | 85 |
| Filler | Silica (*1) | | 80 | | 80 | 95 | 80 | 95 |
| | Carbon black (*2) | | 10 | | 10 | 10 | 10 | 10 |
| Various factors or elements | phr of Filler | | 90 | | 90 | 105 | 90 | 105 |
| | Silica ratio (% by mass) | | 89 | | 89 | 90 | 89 | 90 |
| tan δ, 0°C, distortion of 0.1% | | | 0.683 | | 0.604 | 0.719 | 0.590 | 0.719 |
| tan δ ratio | tan δ (center rubber) / tan δ (shoulder rubber) | | - | | 0.84 | | 0.82 | |
| Evaluation | wet grip performance of course of the wet road (Index) | | 7 | | 6.7 | | 6.5 | |
| | Abrasion resistance (Index) | | 100 | | 95 | | 100 | |

| | | | Comparative Example 4 | | Example 1 | | Example 2 | |
|---|---|---|---|---|---|---|---|---|
| | | | Center | Shoulder | Center | Shoulder | Center | Shoulder |
| Rubber component | Modified conjugated diene polymer | BR1 | | 15 | 10 | 15 | 30 | 15 |
| | Unmodified conjugated diene polymer | BR3 | 50 | | | | | |
| | Styrene-butadiene copolymer rubber | SBR1 | 50 | 85 | 90 | 85 | 70 | 85 |
| Filler | Silica (*1) | | 80 | 95 | 80 | 95 | 80 | 95 |
| | Carbon black (*2) | | 10 | 10 | 10 | 10 | 10 | 10 |
| Various factors or elements | phr of Filler | | 90 | 105 | 90 | 105 | 90 | 105 |
| | Silica ratio (% by mass) | | 89 | 90 | 89 | 90 | 89 | 90 |
| tan δ, 0°C, distortion of 0.1% | | | 0.575 | 0.719 | 0.755 | 0.719 | 0.683 | 0.719 |
| tan δ ratio | tan δ (center rubber) / tan δ (shoulder rubber) | | 0.8 | | 1.05 | | 0.95 | |
| Evaluation | wet grip performance of course of the wet road (Index) | | 6.3 | | 7.8 | | 7.5 | |
| | Abrasion resistance (Index) | | 105 | | 110 | | 120 | |

| | | | Example 3 | | Comparative Example 5 | | Comparative Example 6 | |
|---|---|---|---|---|---|---|---|---|
| | | | Center | Shoulder | Center | Shoulder | Center | Shoulder |
| Rubber component | Modified conjugated diene polymer | BR1 | 50 | 15 | 30 | 15 | 30 | 15 |
| | Modified conjugated diene polymer | BR2 | | | | | | |
| | Styrene-butadiene copolymer rubber | SBR1 | 50 | 85 | 70 | 85 | 70 | 85 |
| Filler | Silica (*1) | | 80 | 95 | 30 | 95 | 60 | 95 |
| | Carbon black (*2) | | 10 | 10 | 60 | 10 | 30 | 10 |
| Various factors or elements | phr of Filler | | 90 | 105 | 90 | 105 | 90 | 105 |
| | Silica ratio (% by mass) | | 89 | 90 | 33 | 90 | 67 | 90 |
| tan δ, 0°C, distortion of 0.1% | | | 0.661 | 0.719 | 0.460 | 0.719 | 0.546 | 0.719 |
| tan δ ratio | tan δ (center rubber) / tan δ (shoulder rubber) | | 0.92 | | 0.64 | | 0.76 | |
| Evaluation | wet grip performance of course of the wet road (Index) | | 7.2 | | 3.6 | | 5.9 | |
| | Abrasion resistance (Index) | | 130 | | 53 | | 93 | |

### [Table 3]

**Table 3 (examples 6, 7, 8 and 10 are not according to the present invention)**

| | | | Example 4 | | Example 5 | | Example 6 | |
|---|---|---|---|---|---|---|---|---|
| | | | Center | Shoulder | Center | Shoulder | Center | Shoulder |
| Rubber component | Modified conjugated diene polymer | BR1 | | 15 | | 15 | | 15 |
| | Modified conjugated diene polymer | BR2 | 10 | | 30 | | 50 | |
| | Styrene-butadiene copolymer rubber | SBR1 | 90 | 85 | 70 | 85 | 50 | 85 |
| Filler | Silica (*1) | | 80 | 95 | 80 | 95 | 80 | 95 |
| | Carbon black (*2) | | 10 | 10 | 10 | 10 | 10 | 10 |
| Various factors or elements | phr of Filler | | 90 | 105 | 90 | 105 | 90 | 105 |
| | Silica ratio (% by mass) | | 89 | 90 | 89 | 90 | 89 | 90 |
| tan δ, 0°C, distortion of 0.1% | | | 0,863 | 0.719 | 0.777 | 0.719 | 0.676 | 0.719 |
| tan δ ratio | tan δ (center rubber) / tan δ (shoulder rubber) | | 1.20 | | 1.08 | | 0.94 | |
| Evaluation | wet grip performance of course of the wet road (Index) | | 8.4 | | 7.9 | | 7.4 | |
| | Abrasion resistance (Index) | | 122 | | 137 | | 152 | |

| | | | Example 7 | | Example 8 | | Example 9 | |
|---|---|---|---|---|---|---|---|---|
| | | | Center | Shoulder | Center | Shoulder | Center | Shoulder |
| Rubber component | Modified conjugated diene polymer | BR1 | 30 | 15 | 30 | 15 | 30 | 15 |
| | Styrene-butadiene copolymer rubber | SBR1 | 70 | 85 | 70 | 85 | 70 | 85 |
| Filler | Silica (*1) | | 50 | 95 | 90 | 95 | 90 | 95 |
| | Carbon black (*2) | | 10 | 10 | 10 | 10 | 5 | 10 |
| Various factors or elements | phr of Filler | | 60 | 105 | 100 | 105 | 95 | 105 |
| | Silica ratio (% by mass) | | 83 | 90 | 90 | 90 | 95 | 90 |
| tan δ, 0°C, distortion of 0.1% | | | 0.654 | 0.719 | 0.705 | 0.719 | 0.777 | 0.719 |
| tan δ ratio | tan δ (center rubber) / tan δ (shoulder rubber) | | 0.91 | | 0.98 | | 1.08 | |
| Evaluation | wet grip performance of course of the wet road (Index) | | 7.1 | | 7.6 | | 7.9 | |
| | Abrasion resistance (Index) | | 113 | | 121 | | 127 | |

| | | | Comparative Example 7 | | Comparative Example 8 | | Example 10 | |
|---|---|---|---|---|---|---|---|---|
| | | | Center | Shoulder | Center | Shoulder | Center | Shoulder |
| Rubber component | Modified conjugated diene polymer | BR1 | | 15 | | 15 | | 15 |
| | Modified conjugated diene polymer | BR2 | 30 | | 30 | | 30 | |
| | Styrene-butadiene copolymer rubber | SBR1 | 70 | 85 | 70 | 85 | 70 | 85 |
| Filler | Silica (*1) | | 30 | 95 | 60 | 95 | 50 | 95 |
| | Carbon black (*2) | | 60 | 10 | 30 | 10 | 10 | 10 |
| Various factors or elements | phr of Filler | | 90 | 105 | 90 | 105 | 60 | 105 |
| | Silica ratio (% by mass) | | 33 | 90 | 67 | 90 | 83 | 90 |
| tan δ, 0°C, distortion of 0.1% | | | 0.431 | 0.719 | 0.539 | 0.719 | 0.676 | 0.719 |
| tan δ ratio | tan δ (center rubber) / tan δ (shoulder rubber) | | 0.60 | | 0.75 | | 0.94 | |
| Evaluation | wet grip performance of course of the wet road (Index) | | 2.4 | | 5.7 | | 7.4 | |
| | Abrasion resistance (Index) | | 70 | | 110 | | 130 | |

### [Table 4]

**Table 4 (examples 13 and 14 are not according to the present invention)**

| | | | Example 11 | | | Example 12 | | Example 13 | |
|---|---|---|---|---|---|---|---|---|---|
| | | | Center | Shoulder | | Center | Shoulder | Center | Shoulder |
| Rubber component | Modified conjugated diene polymer | BR1 | | 15 | | | 15 | | 15 |
| | Modified conjugated diene polymer | BR2 | 30 | | | 30 | | 55 | |
| | Styrene-butadiene copolymer rubber | SBR1 | 70 | 85 | | 70 | 85 | 45 | 85 |
| Filler | Silica (*1) | | 90 | 95 | | 90 | 95 | 50 | 95 |
| | Carbon black (*2) | | 10 | 10 | | 5 | 10 | 10 | 10 |
| Various factors or elements | phr of Filler | | 100 | 105 | | 95 | 105 | 60 | 105 |
| | Silica ratio (% by mass) | | 90 | 90 | | 95 | 90 | 83 | 90 |
| tan δ, 0°C, distortion of 0.1% | | | 0.784 | 0.719 | | 0.863 | 0.719 | 0.559 | 0.719 |
| tan δ ratio | tan δ (center rubber) / tan δ (shoulder rubber) | | 1.09 | | | 1.20 | | 0.78 | |
| Evaluation | wet grip performance of course of the wet road (Index) | | 8 | | | 8.5 | | 6.1 | |
| | Abrasion resistance (Index) | | 138 | | | 144 | | 149 | |

| | | | Example 14 | | | Example 15 | | | |
|---|---|---|---|---|---|---|---|---|---|
| | | | Center | | Shoulder | Center | Shoulder | | |
| Rubber component | Modified conjugated diene polymer | BR1 | | | 10 | | 30 | | |
| | Modified conjugated diene polymer | BR2 | 30 | | | 30 | | | |
| | Styrene-butadiene copolymer rubber | SBR1 | 70 | | 90 | 70 | 70 | | |
| Filler | Silica (*1) | | 50 | | 95 | 50 | 95 | | |
| | Carbon black (*2) | | 10 | | 10 | 10 | 10 | | |
| Various factors or elements | phr of Filler | | 60 | | 105 | 60 | 105 | | |
| | Silica ratio (% by mass) | | 83 | | 90 | 83 | 90 | | |
| tan δ, 0°C, distortion of 0.1% | | | 0.676 | | 0.737 | 0.676 | 0.665 | | |
| tan δ ratio | tan δ (center rubber) / tan δ (shoulder rubber) | | 0.92 | | | 1.02 | | | |
| Evaluation | wet grip performance of course of the wet road (Index) | | 7.3 | | | 7.6 | | | |
| | Abrasion resistance (Index) | | 130 | | | 130 | | | |

As shown in Tables 2 to 4, it is understand that the tires described in Examples containing a divided tread rubber comprising a rubber component containing a styrene-butadiene rubber, a modified conjugated diene polymer and a silica, and wherein the tread rubber includes 40 to 120 parts by mass of a filler based on 100 parts by mass of the rubber component and the silica content in the filler is 80% by mass or more, were achieved compatibly high levels of the wet grip performance and the abrasion resistance. Because, the tires described in Examples containing the divided tread rubber shown 7.0 or more of the index of wet grip performance and 110 or more of the index of abrasion resistance.

### INDUSTRIAL APPLICABILITY

A tire for two-wheel vehicles of the present invention can be suitably used as a tire for competition two-wheel vehicles, a tire for general public roadway two-wheel vehicles, a tire for an on-road two-wheel vehicles and a tire for an off-road two-wheel vehicles.

## Claims

1. A tire for two-wheel vehicles comprising
a pair of bead sections,
a pair of side wall sections, and
a tread section continuing to both sidewall sections,
wherein the tread section is divided into three by the center section including the tire equatorial plane and the pair of shoulder sections including the tread end in the tire width direction,
both the tread rubber of the center section and the tread rubber of the shoulder sections comprise a rubber component comprising a styrene-butadiene rubber and a modified conjugated diene polymer and silica, and the tread rubber of the center section and the tread rubber of the shoulder sections include 40 to 120 parts by mass of a filler based on 100 parts by mass of the rubber component, wherein the silica content in the filler is 80% by mass or more,
wherein the tread rubber of the center section and the tread rubber of the shoulder sections satisfy the relation: 1.0 < [{tan δ at 0°C of the tread rubber at the center section}/{tan δ at 0°C of the tread rubber at the shoulder sections}],
wherein an amount of the styrene-butadiene rubber in the rubber component is 50 mass% or more and,
wherein an amount of the modified conjugated diene polymer in the rubber component is 10 mass% or more.

2. The tire for two-wheel vehicles according to claim 1, wherein the amount of the styrene-butadiene rubber included in the tread rubber of the center section is smaller than the amount of the styrene-butadiene rubber included in the tread rubber of the shoulder sections.

3. The tire for two-wheel vehicles according to claim 1 or 2, wherein the amount of the modified conjugated diene polymer included in the tread rubber of the center section is larger than the amount of the modified conjugated diene polymer included in the tread rubber of the shoulder sections.

4. The tire for two-wheel vehicles according to any one of claims 1 to 3, wherein the modified functional group of the modified conjugated diene polymer comprises at least one atom selected from the group consisting of a nitrogen atom, a silicon atom and an oxygen atom.

## Patentansprüche

1. Reifen für zweirädrige Fahrzeuge, umfassend
ein Paar Wulstabschnitte,
ein Paar Seitenwandabschnitte und
einen Laufflächenabschnitt, der sich zu beiden Seitenwandabschnitten fortsetzt,
wobei der Laufflächenabschnitt durch den Mittelabschnitt einschließlich der Reifenäquatorialebene und das Paar von Schulterabschnitten einschließlich des Laufflächenendes in der Reifenbreitenrichtung in drei Abschnitte unterteilt ist, wobei sowohl der Laufflächengummi des Mittelabschnitts als auch der Laufflächengummi der Schulterabschnitte eine Gummikomponente umfassen, die einen Styrol-Butadien-Gummi und ein modifiziertes konjugiertes Dienpolymer und Siliziumdioxid umfasst, und der Laufflächengummi des Mittelabschnitts und der Laufflächengummi der Schulterabschnitte 40 bis 120 Massenteile eines Füllstoffs, bezogen auf 100 Massenteile der Gummikomponente, einschließen, wobei der Siliziumdioxid-Gehalt in dem Füllstoff 80 Massenprozent oder mehr beträgt,
wobei der Laufflächengummi des Mittelabschnitts und der Laufflächengummi der Schulterabschnitte die Beziehung erfüllen: 1,0<[{tan δ bei 0 °C des Laufflächengummis am Mittelabschnitt}/{tan δ bei 0 °C des Laufflächengummis an den Schulterabschnitten}],
wobei eine Menge des Styrol-Butadien-Gummis in der Gummikomponente mindestens 50 Massenprozent beträgt, und
wobei eine Menge des modifizierten konjugierten Dienpolymers in der Gummikomponente mindestens 10 Massenprozent beträgt.

2. Reifen für zweirädrige Fahrzeuge nach Anspruch 1, wobei die Menge des Styrol-Butadien-Gummis, die in dem Laufflächengummi des Mittelabschnitts eingeschlossen ist, kleiner ist als die Menge des Styrol-Butadien-Gummis, die in dem Laufflächengummi der Schulterabschnitte eingeschlossen ist.

3. Reifen für zweirädrige Fahrzeuge nach Anspruch 1 oder 2, wobei die Menge des modifizierten konjugierten Dienpolymers, die in dem Laufflächengummi des Mittelabschnitts eingeschlossen ist, größer ist als die Menge des modifizierten konjugierten Dienpolymers, die in dem Laufflächengummi der Schulterabschnitte eingeschlossen ist.

4. Reifen für zweirädrige Fahrzeuge nach einem der Ansprüche 1 bis 3, wobei die modifizierte Funktionsgruppe des modifizierten konjugierten Dienpolymers mindestens ein Atom umfasst, das aus der Gruppe ausgewählt wird, die aus einem Stickstoffatom, einem Siliciumatom und einem Sauerstoffatom besteht.

## Revendications

1. Pneumatique pour véhicules à deux roues comprenant
une paire de sections de talon,
une paire de sections de paroi latérale, et
une section de bande de roulement continuant aux deux sections de paroi latérale,
dans lequel la section de bande de roulement est divisée en trois par la section centrale comprenant le plan équatorial du pneumatique et la paire des sections d'épaulement comprenant l'extrémité de bande de roulement dans le sens de la largeur du pneumatique,
à la fois le caoutchouc de bande de roulement de la section centrale et le caoutchouc de bande de roulement des sections d'épaulement comprennent un composant de caoutchouc comprenant un caoutchouc butadiène-styrène et un polymère diène conjugué modifié et de la silice, et le caoutchouc de bande de roulement de la section centrale et le caoutchouc de la bande de roulement des sections d'épaulement comprennent de 40 à 120 parties par masse d'une charge sur base des 100 parties par masse du composant de caoutchouc, dans lequel la teneur en silice dans la charge est de 80 % par masse ou plus,
dans lequel le caoutchouc de bande de roulement de la section centrale et le caoutchouc de bande de roulement des sections d'épaulement répondent à la relation : 1.0 < [{tan δ à 0 °C du caoutchouc de bande de roulement au niveau de la section centrale}/{tan δ à 0 °C du caoutchouc de bande de roulement au niveau des sections d'épaulement}],
dans lequel une quantité du caoutchouc butadiène-styrène dans le composant de caoutchouc est de 50 % en masse ou plus et ;
dans lequel une quantité du polymère diène conjugué modifié dans le composant de caoutchouc est de 10 % en masse ou plus.

2. Pneumatique pour véhicules à deux roues selon la revendication 1, dans lequel la quantité du caoutchouc butadiène-styrène compris dans le caoutchouc de bande de roulement de la section centrale est inférieure à la quantité du caoutchouc butadiène-styrène compris dans le caoutchouc de bande de roulement des sections d'épaulement.

3. Pneumatique pour véhicules à deux roues selon la revendication 1 ou 2, dans lequel la quantité du polymère diène conjugué modifié compris dans le caoutchouc de bande de roulement de la section centrale est supérieure à la quantité du polymère diène conjugué modifié compris dans le caoutchouc de bande de roulement des sections d'épaulement.

4. Pneumatique pour véhicules à deux roues selon l'une quelconque des revendications 1 à 3, dans lequel le groupe fonctionnel modifié du polymère diène conjugué modifié comprend au moins un atome choisi dans le groupe constitué par un atome d'azote, un atome de silicium et un atome d'oxygène.
